# EUROPEAN PATENT SPECIFICATION

(11) **EP 4 518 215 B1**
(45) Date of publication and mention of the grant of the patent: **29.04.2026**
(21) Application number: 22939142.0
(22) Date of filing: 28.04.2022
(51) Int. Cl.: H04L 5/00, H04W 72/04, H04B 7/024, H04B 7/0404, H04B 7/0456, H04B 7/06

(54) **PHYSICAL UPLINK SHARED CHANNEL CONFIGURATION METHOD AND APPARATUS, COMMUNICATION DEVICE, AND STORAGE MEDIUM**
VERFAHREN UND VORRICHTUNG ZUR KONFIGURATION EINES GEMEINSAM GENUTZTEN PHYSIKALISCHEN UPLINK-KANALS, KOMMUNIKATIONSVORRICHTUNG UND SPEICHERMEDIUM
PROCÉDÉ ET APPAREIL DE CONFIGURATION DE CANAL PARTAGÉ DE LIAISON MONTANTE PHYSIQUE, DISPOSITIF DE COMMUNICATION ET SUPPORT DE STOCKAGE

(43) Date of publication of application: 05.03.2025
(73) Proprietor: Beijing Xiaomi Mobile Software Co., Ltd., Beijing 100085 (CN)
(72) Inventor: GAO, Xueyuan, Beijing 100085 (CN)
(74) Representative: Hersina, Günter
(86) International application number: PCT/CN2022/090081
(87) International publication number: WO 2023/206292

(56) References cited:
- WO-A1-2020/263037
- WO-A1-2021/179238
- CN-A- 113 615 283
- CN-A- 114 080 849
- US-A1- 2021 159 966
- US-A1- 2021 351 888
- US-A1- 2021 385 832
- ZTE: "Preliminary views on further enhancement for NR MIMO", 3GPP DRAFT; R1-2003483, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200525 - 20200605, 16 May 2020 (2020-05-16), Mobile Competence Centre ; 650, route des Lucioles ; F-06921 Sophia-Antipolis Cedex ; France , XP051885267

## Description

### TECHNICAL FIELD

The invention relates to, but is not limited to, a field of wireless communication technology, in particular to a method for configuring a physical uplink shared channel (PUSCH), an apparatus for configuring a PUSCH, a communication device, and a storage medium.

### BACKGROUND

Multiple input multiple output (MIMO) system is an antenna system that forms a plurality of channels between the transmitter and the receiver by arranging a plurality of antennas at both the transmitting end and the receiving end in order to increase channel capacity.

In the MIMO system, the transmitter and the receiver can communicate with each other using a plurality of antennas that can operate simultaneously. The MIMO system often adopts complex signal processing techniques to significantly enhance the reliability, transmission range, and throughput. The transmitter sends a plurality of radio-frequency signals simultaneously, and the receiver recovers data from these signals. Related art can be found in US2021159966A1 and CN114080849A and WO 2020/263037A1. Document WO 2020/263037A1 discloses a user equipment (UE) in wireless communication system, including a processor that identifies beam based on the beam indication and transmits uplink (UL) data through the identified beam.

### SUMMARY

In view of this, embodiments of the invention provide a method for configuring a physical uplink shared channel (PUSCH), an apparatus for configuring a PUSCH, a communication device, and a storage medium.

According to a first aspect of the embodiments of the invention, a method for configuring a PUSCH is provided, which is defined in claim 1. The method includes:

for single frequency network (SFN) transmission of an uplink PUSCH, configuring different transmission configuration indications (TCIs) for different antenna panels of a terminal, wherein each TCI is configured to indicate beam information of a beam used when the corresponding antenna panel performs the SFN transmission of the PUSCH, wherein the beam information is at least configured to indicate a direction of the beam, the different TCIs are associated with the same transmission resource, the transmission resource comprises a time-domain resource and a frequency-domain resource, and the different antenna panels perform the SFN transmission of the PUSCH using space division multiplexing (SDM), wherein the SFN transmission includes using a plurality of antenna panels of the terminal to transmit the same data content to a plurality of transmission reception point TRPs using the same frequency-domain resource at the same time.

In an embodiment, the SFN transmission of the PUSCH includes at least one of the following:
a non-coherent joint transmission (NC-JT) of an SFN; or
a coherent joint transmission (C-JT) of the SFN.

In an embodiment, the different TCIs are associated with the same data transmission layer set, and one data transmission layer set comprises: one or more data transmission layers.

In an embodiment,
the different antenna panels of the terminal perform transmission of a single code word (CW) corresponding to one transmit block (TB) of the PUSCH, and the single CW is associated with one data transmission layer set.

In an embodiment,
the different antenna panels of the terminal perform transmission of a single CW of the PUSCH using a single redundancy version (RV).

In an embodiment,
in response to performing the NC-JT of the PUSCH, each antenna panel adopts a pre-coding matrix corresponding to the antenna panel to perform a separate pre-coding process;
   or,
in response to performing the C-JT of the PUSCH, all the antenna panels adopt one pre-coding matrix to perform a joint pre-coding process.

In an embodiment, transmission of the PUSCH is performed, and a maximum number of data transmission layers used by each of the antenna panels of the terminal is: min{N-p1, N-p2, ... N-px, ... N-pX};
in which X is a total number of the antenna panels of the terminal, N-px is a maximum number of data transmission layers supported by an x^{th} antenna panel, and x is a positive integer less than or equal to X.

In an embodiment, in response to performing the NC-JT or the C-JT of the PUSCH, the different TCIs are associated with the same demodulation reference signal (DMRS) port set, wherein each DMRS port set comprises one or more DMRS ports.

In an embodiment, the different TCIs correspond to different transmission reception point (TRP) directions of a base station.

In an embodiment, the different TCIs are configured to indicate different quasi co-location (QCL) Type-D source reference signals, and the QCL Type-D source reference signals are used to determine the TRP directions.

In an embodiment, the TCI includes one of the following:
a unified TCI;
spatial relation information (SRI); or
a sounding reference signal resource indicator (SRI).

In an embodiment,
different unified TCIs are carried by different TCI indication fields;
   or,
different unified TCIs are carried by a single TCI indication field.

In an embodiment, the unified TCI includes one of the following:
a joint TCI; or
a separate TCI.

In an embodiment, the PUSCH includes at least one of the following:
a PUSCH scheduled by downlink control information (DCI);
a schedule-free Type-1 configured grant (CG) PUSCH; and
a schedule-free Type-2 CG PUSCH.

In an embodiment, the TCI is carried in at least one of the following:
a radio resource control (RRC) signaling;
a media access control-control element (MAC-CE) signaling; or
a DCI signaling.

According to a second aspect of the embodiments of the invention, a communication device including a processor, a memory and an executable program stored on the memory and executable by the processor is provided, which is defined in claim 14. When the executable program is executed by the processor, the steps of the method for configuring a PUSCH described in the first aspect are implemented.

According to a third aspect of the embodiments of the invention, a storage medium having an executable program stored thereon is provided, which is defined in claim 15. When the executable program is executed by a processor, the steps of the method for configuring a PUSCH descripted in the first aspect of embodiments are implemented.

With the method for configuring a PUSCH, the apparatus for configuring a PUSCH, the communication device, and the storage medium provided by the embodiments of the invention, for the SFN transmission of the uplink PUSCH, different TCIs are configured for different antenna panels of the terminal, in which the TCIs are associated with beam information, different TCIs are associated with the same transmission resource, the transmission resource include the time-domain resource and the frequency-domain resource, and different antenna panels perform the SFN transmission of the PUSCH using the SDM. In this way, on the one hand, the beam information of different antenna panels is indicated by different TCIs respectively, and the beam information of each antenna panel may be configured individually, which improves a flexibility of a beam configuration. On the other hand, the SFN transmission of the uplink PUSCH is performed by the SDM, and a plurality of antenna panels perform transmission simultaneously, which reduces the uplink transmission delay under multi-TRP and improves the throughput. The different antenna panels may transmit the same data content, which improves the transmission reliability. Moreover, the plurality of antenna panels use the same transmission resource for transmission, which saves the transmission resource and improves the utilization of the transmission resource.

It should be understood that the above general description and the following detailed descriptions are exemplary and explanatory only and do not limit the embodiments of the invention.

### BRIEF DESCRIPTION OF THE DRAWINGS

The accompanying drawings, which are incorporated in and constitute a part of this specification, illustrate embodiments consistent with the invention and together with the specification serve to explain the principles of the invention.
FIG. 1 is a schematic diagram of a wireless communication system according to an exemplary embodiment.
FIG. 2 is a schematic diagram of a multiple transmission reception point (MTRP) transmission according to an exemplary embodiment.
FIG. 3 is a schematic diagram of another MTRP transmission according to an exemplary embodiment.
FIG. 4 is a schematic diagram of a dynamic point select (DPS) transmission according to an exemplary embodiment.
FIG. 5 is a schematic diagram of a coherent joint transmission (C-JT) according to an exemplary embodiment.
FIG. 6 is a schematic diagram of a non-coherent joint transmission (NC-JT) according to an exemplary embodiment.
FIG. 7 is a flowchart of a method for configuring a physical uplink shared channel (PUSCH) according to an exemplary embodiment.
FIG. 8 is a flowchart of another method for configuring a PUSCH according to an exemplary embodiment.
FIG. 9 is a schematic diagram of a MTRP uplink space division multiplexing (SDM) transmission according to an exemplary embodiment.
FIG. 10 is a flowchart of a MTRP uplink SDM transmission according to an exemplary embodiment.
FIG. 11 is a block diagram of an apparatus for configuring a PUSCH according to an exemplary embodiment.
FIG. 12 is a block diagram of an apparatus for configuring a PUSCH according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of the exemplary embodiments do not represent all implementations consistent with the invention. Instead, they are merely examples of apparatuses and methods consistent with aspects related to the invention as recited in the appended claims.

The terms used in the invention are only for the purpose of describing specific embodiments, and are not intended to limit the embodiments of the invention. The singular forms of "a" and "the" used in the invention and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the invention to describe various types of information, the information should not be limited to these terms. These terms are only used to distinguish the same type of information from each other. For example, without departing from the scope of the embodiments of the invention, the first information may also be referred to as the second information, and similarly, the second information may also be referred to as the first information. Depending on the context, the term "if" as used herein can be interpreted as "when", "while" or "in response to determining".

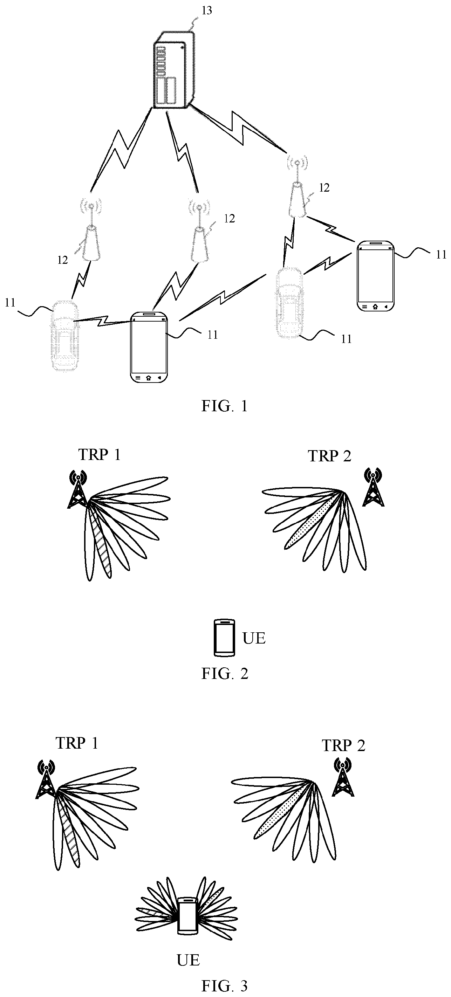

FIG. 1 is a schematic diagram of a wireless communication system according to an embodiment of the invention. As illustrated in FIG. 1, the wireless communication system is a communication system based on cellular mobile communication technology. The wireless communication system may include: a plurality of terminals 11 and a plurality of base stations 12.

The terminal 11 may be a device that provides voice and/or data connectivity to a user. The terminal 11 may communicate with one or more core networks via an radio access network (RAN). The terminal 11 may be an Internet of Things (IoT) terminal, such as a sensor device, a cell phone (or "cellular" phone), and a computer with the IoT terminal. The terminal 11 may also be a stationary, portable, pocket-sized, handheld, computer-built, or vehicle-mounted device, such as, a station (STA), a subscriber unit, a subscriber station, a mobile station, a mobile, a remote station, an access point, a remote terminal, an access terminal, a user terminal, a user agent, a user device, or a user equipment (UE). Or, the terminal 11 may be an unmanned aerial vehicle device. Or, the terminal 11 may be an in-vehicle device, for example, an electronic control unit having wireless communication function, or a wireless communication device external to the electronic control unit. Or, the terminal 11 may also be a roadside device, for example, a street light, a signal light, or other roadside devices having wireless communication functions.

The base station 12 may be a network side device in the wireless communication system. The wireless communication system may be the 4th Generation (4G) mobile communication system, also known as long term evolution (LTE) system. Or, the wireless communication system may also be a 5G system, also known as New Radio (NR) system or 5G NR system. Or, the wireless communication system may be any next generation system of the 5G system. The access network in the 5G system may be called new generation-RAN (NG-RAN) or a machine type communication (MTC) system.

The base station 12 may be an evolved base station (eNB) employed in the 4G system. Or, the base station 12 may be a base station (gNB) with a centralized distributed architecture employed in the 5G system. When the base station 12 adopts a centralized distributed architecture, the base station 12 usually includes a central unit (CU) and at least two distributed units (DUs). The CU is equipped with the protocol stack of a packet data convergence protocol (PDCP) layer, radio link control (RLC) layer, or media access control (MAC) layer. The DU is equipped with the protocol stack of the physical (PHY) layer, and the specific implementation of the base station 12 is not limited in the embodiments of the invention.

A wireless connection is established between the base station 12 and the terminal 11 via a radio interface. In different implementations, the radio interface is a radio interface based on the 4G standard. Or, the radio interface is a radio interface based on the 5G standard, such as a NR. Or, the radio interface may be a radio interface based on the standard of the next generation of 5G.

In some embodiments, an end to end (E2E) connection is established between the terminals 11 in scenarios, such as, vehicle to vehicle (V2V) communication, vehicle to infrastructure (V2I) communication, and vehicle to pedestrian (V2P) communication in vehicle to everything (V2X) communication.

In some embodiments, the above wireless communication system may also include a network management device 13.

The plurality of base stations 12 are connected to the network management device 13 respectively. The network management device 13 may be a core network device in the wireless communication system. For example, the network management device 13 is a mobility management entity (MME) in an evolved packet core (EPC). Or, the network management device may be another core network device, such as a serving gateway (SGW), a public data network gateway (PGW), a policy and charging rules function (PCRF), or a home subscriber server (HSS), etc. The implementation form of the network management device 13 is not limited in the embodiments of the invention.

In order to improve the coverage at the cell edge and provide a more balanced service quality within the service area, coordinated multiple point transmission (CoMP) is still an important technical means in the NR system. From the perspective of network morphology, network deployment is implemented with a large number of distributed access points in combination with centralized processing of a baseband, which is more conducive to providing a balanced user experience rate and significantly reduces delay and signaling overhead caused by cross-area handover. As the frequency band increases, relatively dense deployment of access points is also required to ensure network coverage. In the high frequency band, with the improvement of the integration of active antenna devices, it will be more inclined to adopt modular active antenna arrays.

According to the mapping relation between the transmitted signal streams to a plurality of transmission reception points (TRPs)/antenna panels, the CoMP technology may be classified into non-coherent transmission and coherent transmission. During the coherent transmission, each data layer may be mapped to the plurality of TRPs/panels by a weighted vector. During the non-coherent transmission, each data stream may be only mapped to a part of the TRPs/panels. The coherent transmission has higher requirements for synchronization between transmit points and a transmission capacity of backhaul, and thus is sensitive to many non-ideal factors in real deployment conditions. Relatively speaking, the non-coherent transmission is less affected by the above factors and thus is a key scheme for the CoMP technology.

Quasi co-location (QCL) means that large-scale parameters of the channel experienced by a symbol on a certain antenna port may be inferred from a channel experienced by a symbol on another antenna port. The large-scale parameters may include delay spread, average delay, Doppler spread, Doppler shift, average gain and spatial reception parameters.

The concept of QCL is introduced with the emergence of the CoMP technology. A plurality of possibilities involved in the CoMP process correspond to a plurality of sites (including: the TRP) with different geographical locations or a plurality of sectors with different antenna panel orientation. For example, when the terminal receives data from different sites, a spatial difference between the sites may lead to a difference in the large-scale channel parameters of the receiving link from different sites, such as Doppler frequency offset, delay spread, etc. The large-scale parameters of the channel may directly affect the adjustment and optimization of the filter coefficients during channel estimation. Different channel estimation filter parameters should be applied to adapt to the corresponding channel propagation characteristics for signals sent from different sites.

Therefore, although the differences in spatial positions or angles of various sites are transparent to the UE and the CoMP operation itself, the impact of the above spatial differences on the large-scale parameters of the channel is an important factor to be considered by the UE when performing channel estimation and reception detection. The so-called QCL of two antenna ports in the sense of certain large-scale parameters means that these large-scale parameters of the two ports are the same. In other words, as long as some large-scale parameters of the two ports are consistent, regardless of whether their actual physical locations or corresponding antenna panel orientations are different, the terminal may assume that the two ports are transmitted from the same location (i.e., the QCL).

For some typical application scenarios, considering the possible QCL relation between various reference signals, from the perspective of simplifying signaling, the NR classifies several large-scale parameters of the channel into the following four types, to facilitate system to configure/indicate according to different scenarios:
□ QCL-TypeA: {Doppler frequency shift, Doppler spread, average delay, delay spread}

In addition to the spatial reception parameter, other large-scale parameters are the same.

The spatial reception parameter may not be needed for frequency bands below 6 GHz.
□ QCL-TypeB: {Doppler frequency shift, Doppler spread}

Only for the following two cases below 6GHz frequency band.
□ QCL-TypeC: {Doppler frequency shift, average delay}
□ QCL-TypeD: {spatial reception parameter}

As mentioned earlier, since this parameter is mainly for frequency bands above 6GHz, this parameter is treated as a separate QCL type.

NR Release 15 (Rel-15) stipulates that a demodulation reference signal (DMRS) port in each code division multiplexing (CDM) set is QCL.

A CoMP scenario is shown in FIG. 2, including one terminal and a plurality TRPs. As illustrated in FIG. 3, the terminal may perform uplink PUSCH transmission towards a plurality of TRP directions of the base station. The terminal may use the time-division multiplexing (TDM) transmission method for coordinated transmission. The terminal sends the same transmit block (TB) of the PUSCH to different TRPs of the base station at different transmission occasions in the time domain. This method has relatively low requirements on the terminal capability, does not require the ability to support simultaneous transmission of beams, and has a larger transmission delay.

For the uplink transmission, channels actually passed through by PUSCH channels faced to different TRPs may have very great spatial characteristics, and thus it is considered that QCL-Ds of PUSCH channels with different transmission directions are different.

According to the mapping relation between the transmitted signal streams to a plurality of TRPs/antenna panels, the CoMP may be broadly categorized into the non-coherent transmission and the coherent transmission.

During the coherent transmission, each data transmission layer may be mapped to a plurality of TRPs/antenna panels participating in the coordinated transmission by the weighted vector. If the TRPs/antenna panels have the same large-scale parameters of the channel and use the same frequency source, the coherent transmission is equivalent to splicing a plurality of sub-arrays into a higher-dimensional virtual array, to achieve higher shaping /pre-coding/multiplexing gain. However, in the actual deployment environments, this approach has higher requirements on synchronization between transmit points and the transmission capability of backhaul.

The non-coherent transmission means that each data stream is only mapped to the ports corresponding to the TRPs/antenna panels with consistent large-scale channel parameters (i.e., QCL). Different data streams may be mapped to ports with different QCLs. There is no need to unify all collaboration points (a plurality of TRPs/antenna panels for coordinated transmission) as a virtual array and jointly shape each layer.

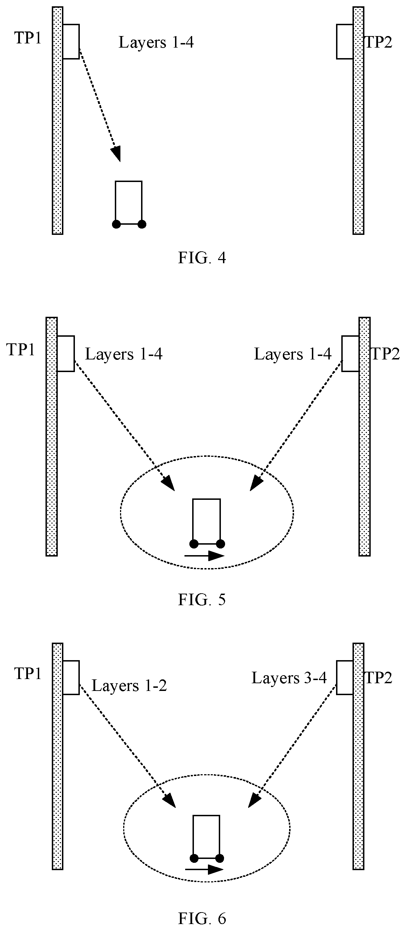

Joint transmission may include: dynamic point select (DPS) transmission, coherent-joint transmission (C-JT) and non-coherent-joint transmission (NC-JT). As illustrated in FIG. 4, the data transmission layers corresponding to all the code words (CWs) of the single-point transmission (i.e., the DPS transmission) are sent through one transmit point. As illustrated in FIG. 5, during the C-JT, all the CWs and layers are sent after jointly pre-coding two transmit points. As illustrated in FIG. 6, during the NC-JT, two data transmission layers corresponding to CW0 are sent from transmit point 1 (TP1), and two data transmission layers corresponding to CW1 are sent from transmit point 2 (TP2).

In the TDM transmission mode, the terminal sends the same TB of the PUSCH to different TRPs of the base station at different transmission occasions in the time domain, which results in a larger delay and low throughput. How to improve transmission reliability and throughput while effectively reducing the transmission delay under multi-TRP is an urgent problem to be solved.

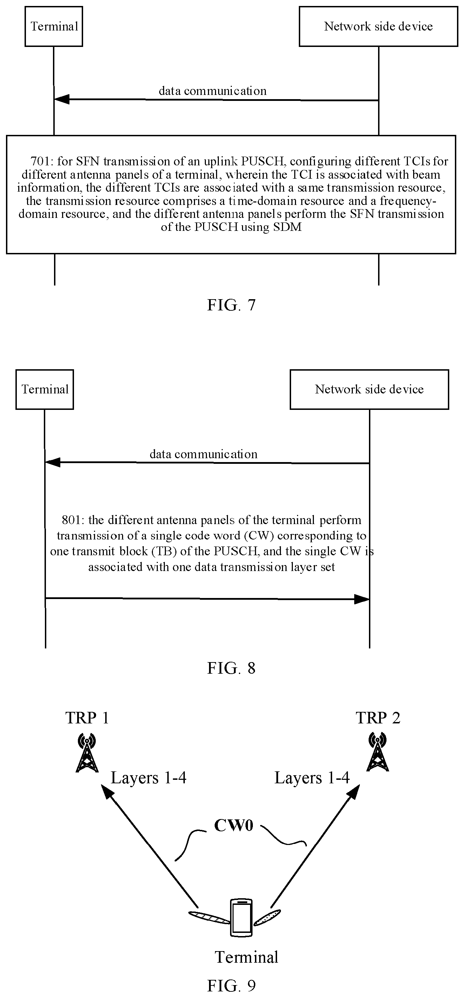

As illustrated in FIG. 7, this exemplary embodiment provides a method for configuring a PUSCH, which may be performed by a network-side device and/or a terminal in a cellular mobile communication system. The method includes the following steps.

At step 701, for single frequency network (SFN) transmission of an uplink PUSCH, different transmission configuration indications (TCIs) are configured for different antenna panels of a terminal, in which the TCI is associated with beam information, different TCIs are associated with the same transmission resource, the transmission resource includes a time-domain resource and a frequency-domain resource, and different antenna panels perform SFN transmission of the PUSCH using space division multiplexing (SDM).

The embodiment may be applied to, but not limited to, network side devices, such as a core network device and an access network device, and/or terminals, etc. The terminal includes: a handheld terminal and/or a non-handheld terminal, which is not limited herein.

The terminal may be a UE capable of realizing CoMP to a plurality of TRP directions of the base station simultaneously. The UE may achieve uplink CoMP to the TRP directions of a plurality of base stations simultaneously. The CoMP refers to that a plurality of geographically separated TRPs send synergistically data to one terminal or receive synergistically data from one terminal. The TRP may include: the antenna panels of the base station, etc.

For example, the terminal may support the SFN transmission of the PUSCH to N TRPs of the base station simultaneously through N antenna panels. N is a positive integer greater than or equal to 2. Each antenna panel of the UE may correspond to one TRP of the base station. Different antenna panels of the terminal may use beams in different directions to perform the SFN transmission of the PUSCH simultaneously.

The SFN transmission includes: using a plurality of antenna panels of the terminal to transmit the same data content to the TRP using the same frequency domain resources at the same time. For example, the SFN transmission may be that the terminal uses a plurality of antenna panels to transmit the same TB using the same frequency domain resources at the same time.

The SFN transmission of the PUSCH is performed through a plurality of antenna panels. That is, the plurality of antenna panels transmit the same data content. The network side device may receive data content through a plurality of TRPs and obtain the data content through joint decoding and other methods, which improves a reliability of an uplink and downlink transmission.

In an embodiment, the SFN transmission of the PUSCH includes at least one of the following:
NC-JT of an SFN; or
C-JT of the SFN.

When performing the C-JT of the PUSCH, the terminal needs to jointly shape the transmitted data stream through a plurality of antenna panels and coordinate the pre-coding matrices (relative phases) of different TPs to ensure that the same data stream may be coherently superimposed at the TRP end. That is, the sub-arrays of a plurality of antenna panels are virtualized into a higher-dimensional antenna array to obtain a higher shaping gain. Each antenna panel may adopt a unified pre-coding matrix for joint pre-coding process in order to perform the C-JT.

When performing the NC-JT of the PUSCH, the terminal does not need to jointly shape a plurality of antenna panels. Each antenna panel may independently pre-code the data stream it transmits without coordinating the relative phase. Each antenna panel may adopt the pre-coding matrix corresponding respectively to each antenna panel for independent pre-coding process to perform the NC-JT.

Each antenna panel of the terminal may be configured with one TCI respectively. The TCI is configured to indicate beam information of the beam used when the corresponding antenna panel performs the SFN transmission of the PUSCH. The beam information is at least configured to indicate the direction of the beam. The TCI may be a TCI state.

Different antenna panels of the terminal are configured with different TCIs. It may be that the network side device configures different TCI for each antenna panel of the terminal. Different antenna panels of the terminal are configured with different TCIs. It may be that the terminal determines different TCIs for each antenna panel. The TCI may be sent by the network side device to the terminal.

In an embodiment, the TCI includes one of the following:
a unified TCI;
spatial relation Information (SRI); or
a sounding reference signal resource indicator (SRI).

The TCI may be the unified TCI. The SRI may be used when the unified TCI is not configured.

The unified TCI may be used when the TRP has beam consistency. The unified TCI indicates uplink and downlink beams through multi-channel and signal sharing, and multicall control (multi-CC) uses a common beam. The TRP has the beam consistency, which may include that: a downlink receiving beam and an uplink transmitting beam of the TRP are reciprocal, that is, the downlink receiving beam and the uplink transmitting beam has beam consistency. For the beam consistency, the direction of the uplink beam is also the direction of the downlink beam.

The base station may also use the spatial relation information (SRI) to indicate the TCI to the terminal.

The base station may also carry the TCI in the sounding reference signal resource indicator (SRI). The sounding reference signal resource indicator is configured to indicate the uplink transmitting analog beam direction corresponding to the specific sounding reference signal (SRS) resource used by the uplink transmitting PUSCH in codebook transmission, and to indicate which the specific SRS resource is used for sending uplink PUSCH pre-coding when sending the PUSCH in non-codebook transmission, i.e., the transmitting beam directions of different layers. Reserved bits of the sounding reference signal resource indicator (SRI) may be used to carry the TCI. Different sounding reference signal resource indicators (SRIs) may be sent for different antenna panels. The TCI in the sounding reference signal resource indicator (SRI) may be directly associated with the antenna panel that receives the sounding reference signal resource indicator (SRI).

In an embodiment, the unified TCI includes one of the following:
a joint TCI; or
a separate TCI.

The TCI corresponding to each antenna panel may be either the joint TCI or the separate TCI.

The unified TCI may include: the joint TCI and the separate TCI. The joint TCI is configured to indicate both the uplink transmitting beam and the downlink receiving beam, and the separate TCI is configured to indicate the uplink transmitting beam or the downlink receiving beam.

In an embodiment, different TCIs correspond to different TRP directions of the base station.

The beams indicated by the TCI may be transmitted at the same time, e.g., within the same time slot, using the same time-domain resource and frequency-domain resource. The TCI may achieve the SFN transmission of the PUSCH performed by different antenna panels using SDM by indicating beams in different directions.

In an embodiment, different TCIs are configured to indicate different QCL TypeD source reference signals (RSs), and the QCL Type-D source RS is configured to determine the TRP direction.

The QCL Type-D source RS may include at least one of the following: a channel state information reference signal (CSI-RS), a synchronization signal/PBCH block (SSB), or a sounding reference signal (SRS).

The base station and the UE may interact with different QCL Type-D source RSs within different beams for determining different beams for communication. Each QCL Type-D source RS has an association relation with one beam. The association relation may be a one-to-one correspondence. The direction of different beams may be different.

The TCI may indicate the beam in one direction via the QCL Type-D source RS.

In an embodiment,
different unified TCIs are carried by different TCI indication fields;
   or,
different unified TCIs are carried by a single TCI indication field.

One TCI may be carried by a plurality of independent TCI indication fields. For example, the TCI may be indicated by two independent TCI indication fields, and each TCI indication field carries one TCI, i.e., each TCI indication field indicates one beam direction.

It is also possible to carry a plurality of TCIs through one TCI indication field, i.e., one TCI code point. For example, two TCIs may be carried through one TCI indication field, e.g., one TCI indication field indicates a first TRP beam direction and a second TRP beam direction.

In an embodiment, the PUSCH includes at least one of the following:
a PUSCH scheduled by downlink control information (DCI);
a schedule-free Type-1 configured grant (CG) PUSCH; or
a schedule-free Type-2 CG PUSCH.

The PUSCH may be scheduled by a single DCI. The DCI may be sent through a PDCCH resource.

The CG PUSCH is classified into two types: type 1 and type 2. All the parameters of the Type-1 CG PUSCH may be configured by a radio resource control (RRC) signaling, and the Type-1 CG PUSCH may be sent periodically once configured. Part of the parameters of the Type-2 CG PUSCH may be configured by a RRC signaling, which need to be activated/deactivated by DCI, and other parameters may be given in the activation DCI, and may be used periodically after activation.

In an embodiment, the TCI is carried in at least one of the following:
a RRC signaling;
a media access control-control element (MAC-CE) signaling; or
a DCI signaling.

The base station may carry the TCI by different signaling, which improves a flexibility of indicating the TCI.

Therefore, on the one hand, the beam information of different antenna panels is indicated by different TCIs respectively, and the beam information of each antenna panel may be configured individually, which improves a flexibility of a beam configuration. On the other hand, the SFN transmission of the uplink PUSCH is performed by the SDM, and a plurality of antenna panels perform transmission simultaneously, which reduces the uplink transmission delay under multi-TRP and improves the throughput. The different antenna panels may transmit the same data content, which improves the transmission reliability. Moreover, the plurality of antenna panels use the same transmission resource for transmission, which saves the transmission resource and improves the utilization of the transmission resource.

In an embodiment, different TCIs are associated with the same data transmission layer set, and each data transmission layer set includes: one or more data transmission layers.

The data transmission layer set associated with the TCI may be a data transmission layer set sent by the antenna panel associated with the TCI. The data transmission layer set associated with each of the TCIs is the same, i.e., each antenna panel sends the same data transmission layer. Different antenna panels may transmit the same data content, which improves the transmission reliability.

For example, the terminal has two antenna panels, and the data transmission layer set of the TCI corresponding to the two antenna panels includes data transmission layer (Layer) 1, Layer 2, Layer 3, and Layer 4, i.e., there are four data transmission layers. The two antennas may transmit the four data transmission layers using the same transmission resource respectively.

In an embodiment, transmission of the PUSCH is performed, and a maximum number of data transmission layers used by each of the antenna panels of the terminal is: min{N-p1, N-p2, ... N-px, ... N-pX};

in which X is a total number of the antenna panels of the terminal, N-px is a maximum number of data transmission layers supported by an x^{th} antenna panel, and x is a positive integer less than or equal to X.

Different antenna panels may support the same or different data transmission layers. Since different antenna panels transmit the same data transmission layers, the number of data transmission layers needs to meet a support capability of the antenna panel with the smallest support capability of the number of a data transmission layer. Therefore, the maximum number of data transmission layers in the data transmission layer set associated with the TCI may be the number of data transmission layers supported by the antenna panel with the smallest support capability of the number of data transmission layer among the antenna panels.

For example, the terminal may report the maximum number of ports contained in the maximum source reference signal (SRS) resource supported by different antenna panels of the terminal (the network side device may determine the maximum number of data transmission layers supported by the antenna panel according to the maximum number of ports, for example, the maximum number of ports may be determined as the maximum number of data transmission layers supported by the antenna panel) or the maximum number of data transmission layers supported by the UE to the network side device such as the base station. The network side device may determine a number of data transmission layers in the data transmission layer set based on the maximum number of data transmission layers supported by each antenna panel when indicating the TCI to the terminal.

For example, the maximum number of data transmission layers supported by the two antenna panels (antenna panel 1 and antenna panel 2) of the UE are N_p1 and N_p2, respectively. The maximum number of data transmission layers supported during the CW mapping process is: min{N_p1, N_p2}. The CW may be mapped to I data transmission layers, where I is less than or equal to min{N_p1, N_p2}.

As illustrated in FIG. 8, this exemplary embodiment provides a method for configuring a PUSCH, which may be performed by a network-side device and/or a terminal in a cellular mobile communication system. The method includes the following steps.

At step 801, different antenna panels of the terminal perform transmission of a single CW corresponding to one TB of the PUSCH, and the single CW is associated with one data transmission layer set.

One TB may be subjected to data processing to obtain one CW. The data processing may include: code block segmentation, channel coding, rate matching, code block series, etc. The CW of the one TB may be mapped to M data transmission layers on the same time-frequency resource in the same time slot, where M is a positive integer greater than or equal to 1. Each of the antenna panel in the plurality of antenna panels of the terminal send the M data transmission layers.

For example, as illustrated in FIG. 9, the terminal has two antenna panels. The data transmission layer set associated with the TCI corresponding to the antenna panel 1 includes Layer 1, Layer 2, Layer 3 and Layer 4. The data transmission layer set associated with the TCI corresponding to the antenna panel 2 also includes Layer 1, Layer 2, Layer 3 and Layer 4. The CW of one TB may be mapped to four data transmission layers: Layer 1, Layer 2, Layer 3 and Layer 4, i.e., data of the four data transmission layers constitutes one CW. During transmission, both the antenna panel 1 and the antenna panel 2 send Layer 1, Layer 2, Layer 3 and Layer 4. One antenna panel corresponds to one TRP. Each TRP may correspond to one beam direction. TRPs have different beam direction with each other.

In this way, the plurality of antenna panels use beams with different directions send the data transmission layer, in which each beam send a plurality of data transmission layers of one TB, thereby realizing SDM. The plurality of antenna panels perform transmission simultaneously. When one or more antennas have problems such as transmission failure due to an influence of an transmission environment, the plurality of data transmission layers received respectively by a plurality of TRPs may be combined and decoded to obtain the complete data, thereby improving the transmission reliability.

In an embodiment, different antenna panels of the terminal perform the transmission of the single CW of the PUSCH using a single redundancy version (RV).

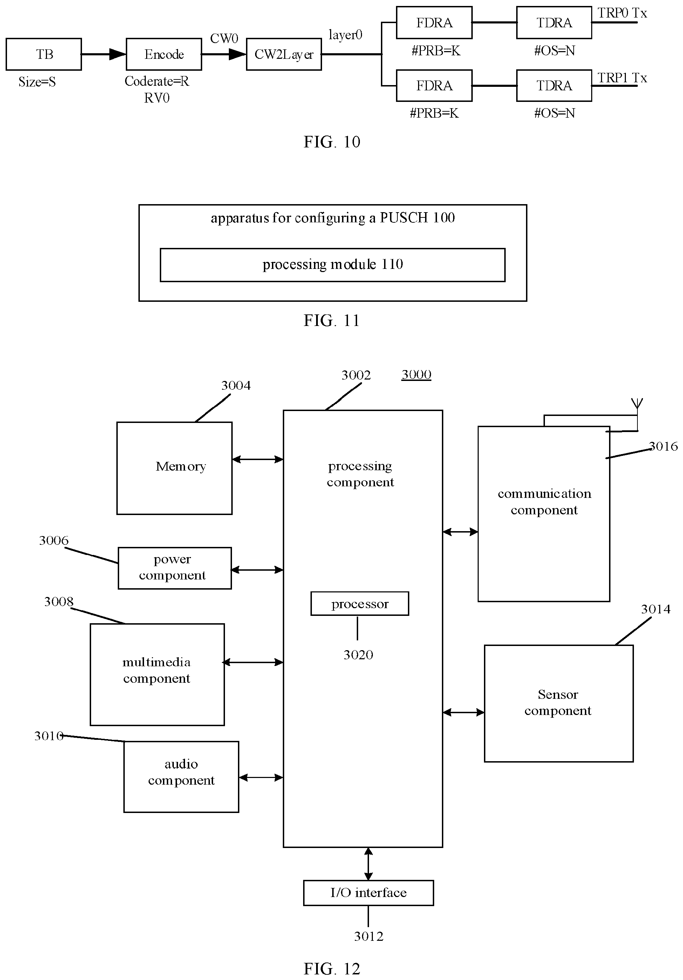

As illustrated in FIG. 10, one TB corresponds to one CW. The TB may be subjected to rate matching based on one RV to obtain one CW. A coded bit is stored in a circular cache, and sequentially read from the circular cache according to the RV during each transmission, to achieve the rate matching.

The RV may be carried in the DCI by the network side to indicate to the terminal.

In an embodiment,
in response to performing the NC-JT of the PUSCH, each antenna panel adopts a pre-coding matrix corresponding to the antenna panel to perform a separate pre-coding process;
   or,
in response to performing the C-JT of the PUSCH, all the antenna panels adopt one pre-coding matrix to perform a joint pre-coding process.

For performing the NC-JT of the PUSCH, the terminal does not need to jointly shape a plurality of antenna panels. Each antenna panel may independently pre-code the data stream it transmits without coordinating the relative phase. Each antenna panel may adopt the pre-coding matrix corresponding respectively to each antenna panel for independent pre-coding process to perform the NC-JT.

When performing the C-JT of the PUSCH, the terminal may jointly shape the data transmission layer transmitted respectively by each antenna panel through a plurality of antenna panels, and coordinate the coding matrices (relative phases) of different TPs to ensure that the same data transmission layer may be coherently superimposed at the TRP end. That is, the sub-arrays of a plurality of antenna panels are virtualized into a higher-dimensional antenna array to obtain a higher shaping gain. Each antenna panel may adopt one unified pre-coding matrix for the joint pre-coding process in order to perform the C-JT.

In an embodiment, in response to performing the NC-JT or the C-JT of the PUSCH, different TCIs are associated with the same DMRS port set, in which each DMRS port set includes one or more DMRS ports.

For the NC-JT or the C-JT of the SFN transmission, the DMRS port set associated with each TCI may be the same, i.e., under the same time-domain resource and frequency-domain resource, the DMRS port for each antenna panel using the SDM to perform the NC-JT or the C-JT is the same.

A specific example is provided below in combination with any of the above embodiments.
□ N TCI states, configured by a unified TCI framework for the terminal, that are capable of simultaneous transmission, depending on whether the MP/MTRP beam consistency is established, may be jointly indicated to the terminal by N different joint TCIs or N separate uplink TCIs (UL TCIs). N may be 2. That is, there may be two TICs: TCI1 and TCI2. Each TCI corresponds to a transmitting/receiving beam of one antenna panel of the terminal and faces one TRP transmitting direction. TCIs contain different QCL Type-D source RSs with each other, and the terminal uses the antenna panel corresponding to the QCL Type-D source RS contained in the TCI for reception.

When the unified TCI is not configured, it falls back to the 3GPP release 15/16 (R15/16) indication scheme, and the spatialRelationInfo1/2 indicated by the SRI combination is used.
□ The support of the actual number of data transmission layers corresponding to each TCI needs to take into account the terminal capability. The maximum number of ports contained in the maximum SRS resource supported by different panels reported by the terminal or the maximum number of supported data transmission layers (Layers) may be different. That is, the maximum numbers of data transmission layers supported by different antenna panels, i.e., panel 1 and panel 2, are N_p1 and N_p2 respectively.
□ SDM transmission based on a single DCI (S-DCI) may achieve the NC-JT transmission of an uplink MTRP through the following schemes.

Scheme SDM-4 is shown in FIG. 9.

The data of one TB is transmitted through the same data transmission layer set on the same time-frequency resources in the same time slot. A plurality of TCIs are simultaneously associated with one data transmission layer set. The plurality of TCIs are simultaneously associated with one corresponding allocated DMRS port or a plurality of DMRS port sets. The data transmission layer set includes one or more data transmission layers. For example, TCI1 and TCI2 are simultaneously associated with one data transmission layer or a plurality of data transmission layers, and are associated with one corresponding allocated DMRS port or a plurality of DMRS ports.

Single CW transmission is realized through a single RV, and the encoded bit is transmitted in the same data transmission layer set.

Each TCI direction independently performs the pre-coding process, i.e., each antenna panel/TRP direction uses a separate pre-coder.

The maximum total number of supported transmission layers is 4, which is actually not exceeding min{N_p1,N_p2}. N_p1 and N_p2 are the maximum number of data transmission layers supported, respectively, by the two antenna panels of the terminal.

Scheme SDM-5 is shown in FIG. 9.

The data of one TB is transmitted through the same data transmission layer set on the same time-frequency resource in the same time slot. A plurality of TCIs are simultaneously associated with one data transmission layer set. The plurality of TCIs are simultaneously associated with one corresponding allocated DMRS port or a plurality of DMRS port sets. The data transmission layer set includes one or more data transmission layers. For example, TCI1 and TCI2 are simultaneously associated with one data transmission layer or a plurality of data transmission layers, and are associated with one corresponding allocated DMRS port or a plurality of DMRS ports.

Single CW transmission is realized through a single RV, and the encoded bit is transmitted in the same data transmission layer set.

Two TCI directions jointly perform the pre-coding process, i.e., all the antenna panels/TRPs transmit data uses the same pre-coder at each data transmission layer.

The maximum total number of supported transmission layers is 4, which is actually not exceeding min{N_p1,N_p2}. N_p1 and N_p2 are the maximum number of data transmission layers supported respectively by the two antenna panels of the terminal.

The embodiments of the invention also provide an apparatus 100 for configuring a PUSCH. As illustrated in FIG. 11, the apparatus is applied to a network-side device and/or a terminal in a cellular mobile wireless communication system. The apparatus 100 includes:

a processing module 110, configured to, for SFN transmission of an uplink PUSCH, configure different TCIs for different antenna panels of a terminal, in which the TCI is associated with beam information, the different TCIs are associated with the same transmission resource, the transmission resource includes a time-domain resource and a frequency-domain resource, and different antenna panels perform the SFN transmission of the PUSCH using SDM.

In an embodiment, the SFN transmission of the PUSCH includes one of the following:
NC-JT of an SFN; or
C-JT of the SFN.

In an embodiment, the different TCIs are associated with the same data transmission layer set, and one data transmission layer set includes: one or more data transmission layers.

In an embodiment, the different antenna panels of the terminal perform transmission of a single CW corresponding to one TB of the PUSCH, and the single CW is associated with one data transmission layer set.

In an embodiment, the different antenna panels of the terminal perform transmission of a single CW of the PUSCH using a single RV.

In an embodiment, in response to performing the NC-JT of the PUSCH, each antenna panel adopts a pre-coding matrix corresponding to the antenna panel to perform a separate pre-coding process;
or,
in response to performing the C-JT of the PUSCH, all the antenna panels adopt one pre-coding matrix to perform a joint pre-coding process.

In an embodiment, transmission of the PUSCH is performed, and a maximum number of data transmission layers used by each of the antenna panels of the terminal is: min{N-p1, N-p2, ... N-px, ... N-pX};
in which X is a total number of the antenna panels of the terminal, N-px is a maximum number of data transmission layers supported by an x^{th} antenna panel, and x is a positive integer less than or equal to X.

In an embodiment, in response to performing the NC-JT or the C-JT of the PUSCH, different TCIs are associated with the same DMRS port set, in which each DMRS port set includes one or more DMRS ports.

In an embodiment, different TCIs correspond to different TRP directions of a base station.

In an embodiment, different TCIs are configured to indicate different QCL TypeD source reference signals, and the QCL Type-D source reference signal is used to determine the TRP direction.

In an embodiment, the TCI includes one of the following:
a unified TCI;
spatial relation information (SRI); or
a sounding reference signal resource indicator (SRI).

In an embodiment, different unified TCIs are carried by different TCI indication fields;
or,
different unified TCIs are carried by a single TCI indication field.

In an embodiment, the unified TCI includes one of the following:
a joint TCI; or
a separate TCI.

In an embodiment, the PUSCH includes at least one of the following:
a PUSCH scheduled by DCI;
a schedule-free Type-1 CG PUSCH; or
a schedule-free Type-2 CG PUSCH.

In an embodiment, the TCI is carried in at least one of the following:
a RRC signaling;
a MAC-CE signaling; or
a DCI signaling.

In some exemplary embodiments, the processing module 110 may be implemented by one or more central processing units (CPUs), graphics processing units (GPUs), baseband processors (BPs), application specific integrated circuits (ASICs), digital signal processors (DSPs), programmable logic devices (PLDs), complex programmable logic devices (CPLDs), field-programmable gate arrays (FPGAs), general-purpose processors, controllers, micro controller units (MCUs), microprocessors, or other electronic components, for performing the above described methods.

FIG. 12 is a block diagram of a device 3000 for configuring a PUSCH according to an exemplary embodiment. For example, the device 3000 may be a mobile phone, a computer, a digital broadcasting terminal, a message transceiver device, a game console, a tablet device, a medical device, a fitness device or a personal digital assistant.

As illustrated in FIG. 12, the device 3000 may include one or more of the following components: a processing component 3002, a memory 3004, a power component 3006, a multimedia component 3008, an audio component 3010, an input/output (I/O) interface 3012, a sensor component 3014, and a communication component 3016.

The processing component 3002 typically controls overall operations of the device 3000, such as the operations associated with display, telephone calls, data communications, camera operations, and recording operations. The processing component 3002 may include one or more processors 3020 to perform all or part of the steps in the above described method. Moreover, the processing component 3002 may include one or more modules which facilitate the interaction between the processing component 3002 and other components. For example, the processing component 3002 may include a multimedia module to facilitate the interaction between the multimedia component 3008 and the processing component 3002.

The memory 3004 is configured to store various types of data to support the operation of the device 3000. Examples of such data include instructions for any applications or methods operated on the device 3000, contact data, phonebook data, messages, pictures, video, etc. The memory 3004 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 3006 provides power to various components of the device 3000. The power component 3006 may include a power management system, one or more power sources, and any other components associated with the generation, management, and distribution of power in the device 3000.

The multimedia component 3008 includes a screen providing an output interface between the device 3000 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 3008 includes a front-facing camera and/or a rear-facing camera. When the device 3000 is in an operating mode, such as a shooting mode or a video mode, the front-facing camera and/or the rear-facing camera may receive external multimedia data. Each front-facing camera and rear-facing camera may be a fixed optical lens system or has focal length and optical zoom capability.

The audio component 3010 is configured to output and/or input audio signals. For example, the audio component 3010 includes a microphone (MIC) configured to receive an external audio signal when the device 3000 is in an operation mode, such as a call mode, a recording mode, and a voice recognition mode. The received audio signal may be further stored in the memory 3004 or transmitted via the communication component 3016. In some embodiments, the audio component 3010 further includes a speaker to output audio signals.

The I/O interface 3012 provides an interface between the processing component 3002 and peripheral interface modules, such as a keyboard, a click wheel, buttons, and the like. The buttons may include, but are not limited to, a home button, a volume button, a starting button, and a locking button.

The sensor component 3014 includes one or more sensors to provide status assessments of various aspects of the device 3000. For instance, the sensor component 3014 may detect an open/closed status of the device 3000, relative positioning of components, e.g., the display and the keypad, of the device 3000, a change in position of the device 3000 or a component of the device 3000, a presence or absence of user contact with the device 3000, an orientation or an acceleration/deceleration of the device 3000, and a change in temperature of the device 3000. The sensor component 3014 may include a proximity sensor configured to detect the presence of nearby objects without any physical contact. The sensor component 3014 may also include a light sensor, such as a Complementary Metal Oxide Semiconductor (CMOS) or Charge-Coupled Device (CCD) image sensor, for use in imaging applications. In some embodiments, the sensor component 3014 may also include an accelerometer sensor, a gyroscope sensor, a magnetic sensor, a pressure sensor, or a temperature sensor.

The communication component 3016 is configured to facilitate communication, wired or wirelessly, between the device 3000 and other devices. The device 3000 may access a wireless network based on a communication standard, such as Wi-Fi, 2G or 3G, or a combination thereof. In an exemplary embodiment, the communication component 3016 receives a broadcast signal or broadcast associated information from an external broadcast management system via a broadcast channel. In an exemplary embodiment, the communication component 3016 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In some embodiments, the device 3000 may be implemented with one or more ASICs, DSPs, Digital Signal Processing Devices (DSPDs), PLDs, FPGAs, controllers, microcontrollers, microprocessors or other electronic components, for performing the above described method.

In some exemplary embodiments, there is also provided a non-transitory computer readable storage medium including instructions, such as the memory 3004, executable by the processor 3020 in the device 3000, for performing the above method. For example, the non-transitory computer-readable storage medium may be a ROM, a Random Access Memory (RAM), a CD-ROM, a magnetic tape, a floppy disc, and an optical data storage device.

Other embodiments of the invention will be apparent to those skilled in the art from consideration of the specification and practice of the invention disclosed here. This application is intended to cover any variations, uses, or adaptations of the invention following the general principles thereof and including such departures from the invention as come within known or customary practice in the art.

It will be appreciated that the invention is not limited to the exact construction that has been described above and illustrated in the accompanying drawings, and that various modifications and changes may be made without departing from the scope thereof. It is intended that the scope of the invention only be limited by the appended claims.

## Claims

1. A method for configuring a physical uplink shared channel PUSCH, comprising:
for a single frequency network SFN transmission of an uplink PUSCH, configuring (701) different transmission configuration indications TCIs for different antenna panels of a terminal,
wherein each TCI is configured to indicate beam information of a beam used when the corresponding antenna panel performs the SFN transmission of the PUSCH, wherein the beam information is at least configured to indicate a direction of the beam,
wherein the different TCIs are associated with the same transmission resource, the transmission resource comprises a time-domain resource and a frequency-domain resource, and the different antenna panels perform the SFN transmission of the PUSCH using space division multiplexing SDM;
wherein the SFN transmission includes using a plurality of antenna panels of the terminal to transmit the same data content to a plurality of transmission reception point TRPs using the same frequency-domain resource at the same time.

2. The method of claim 1, wherein the SFN transmission of the PUSCH comprises:
a non-coherent joint transmission, NC-JT, of an SFN.

3. The method of claim 2, wherein the different TCIs are associated with the same data transmission layer set, and one data transmission layer set comprises: one or more data transmission layers.

4. The method of claim 3, wherein
the different antenna panels of the terminal perform (801) transmission of a single code word CW corresponding to one transmit block TB of the PUSCH, and the single CW is associated with one data transmission layer set.

5. The method of claim 3, wherein
the different antenna panels of the terminal perform transmission of a single CW of the PUSCH using a single redundancy version RV.

6. The method of claim 3, wherein
each antenna panel adopts a pre-coding matrix corresponding to the antenna panel to perform a separate pre-coding process, wherein the NC-JT of the PUSCH is performed.

7. The method of claim 3, wherein a transmission of the PUSCH is performed, and a maximum number of data transmission layers used by each of the antenna panels of the terminal is: min{N-p1, N-p2, ... N-px, ... N-pX};
wherein X is a total number of the antenna panels of the terminal, N-px is a maximum number of data transmission layers supported by an x^{th} antenna panel, and x is a positive integer less than or equal to X.

8. The method of any one of claims 2-7, wherein
the different TCIs are associated with the same demodulation reference signal DMRS port set, wherein each DMRS port set comprises one or more DMRS ports.

9. The method of any one of claims 1-7, wherein the different TCIs correspond to different transmission reception point TRP directions of a base station.

10. The method of claim 9, wherein the different TCIs are configured to indicate different quasi co-location QCL Type-D source reference signals, and the QCL Type-D source reference signals are used to determine the TRP directions.

11. The method of any one of claims 1-7, wherein the TCI comprises one of the following:
a unified TCI;
spatial relation information SRI; or
a sounding reference signal resource indicator SRI;
optionally, wherein different unified TCIs are carried by different TCI indication fields; or, different unified TCIs are carried by a single TCI indication field; and/or
optionally, wherein the unified TCI comprises one of the following: a joint TCI; or a separate TCI.

12. The method of any one of claims 1-7, wherein the PUSCH comprises at least one of the following:
a PUSCH scheduled by downlink control information DCI;
a schedule-free Type-1 configured grant CG PUSCH; or
a schedule-free Type-2 CG PUSCH.

13. The method of any one of claims 1-7, wherein the TCI is carried in at least one of the following:
a radio resource control RRC signaling;
a media access control-control element MAC-CE signaling; or
a DCI signaling.

14. A communication device (3000) comprising a processor (3020), a memory (3004) and an executable program stored on the memory (3004) and executable by the processor (3020), wherein when the executable program is executed by the processor (3020), the steps of the method for configuring the PUSCH of any one of claims 1-13 are implemented.

15. A storage medium having an executable program stored thereon, wherein, when the executable program is executed by a processor, the steps of the method for configuring the PUSCH of any one of claims 1-13 are implemented.

## Patentansprüche

1. Ein Verfahren zum Konfigurieren eines gemeinsam genutzten physischen Uplink-Kanals, PUSCH, das folgende Schritte aufweist:
für eine Einzelfrequenznetzwerk-,SFN,-Übertragung eines Uplink-PUSCH, Konfigurieren (701) unterschiedlicher Übertragungskonfigurationsindikationen, TCIs, für unterschiedliche Antennenfelder eines Endgerätes,
wobei jede TCI dazu konfiguriert ist, Strahlinformationen eines Strahls anzugeben, der verwendet wird, wenn das entsprechende Antennenfeld die SFN-Übertragung des PUSCH ausführt, wobei die Strahlinformation zumindest dazu konfiguriert ist, eine Richtung des Strahls anzugeben,
wobei die unterschiedlichen TCIs zu derselben Übertragungsressource zugeordnet sind, die Übertragungsressource eine Zeitbereichsressource und eine Frequenzbereichsressource aufweist und die unterschiedlichen Antennenfelder die SFN-Übertragung des PUSCH unter Verwendung von Raumtrennungsmultiplexing, SDM, ausführen;
wobei die SFN-Übertragung ein Verwenden einer Mehrzahl von Antennenfeldern des Endgerätes umfasst, um denselben Dateninhalt an eine Mehrzahl von Übertragungsempfangspunkten, TRPs, unter Verwendung derselben Frequenzbereichsressource zur gleichen Zeit zu übertragen.

2. Das Verfahren gemäß Anspruch 1, wobei die SFN-Übertragung des PUSCH Folgendes ausweist:
eine nicht-kohärente gemeinsame Übertragung, NC-JT, eines SFN.

3. Das Verfahren gemäß Anspruch 2, wobei die unterschiedlichen TCIs derselben Datenübertragungsschichtmenge zugeordnet sind und eine Datenübertragungsschichtmenge Folgendes aufweist: eine oder mehrere Datenübertragungsschichten.

4. Das Verfahren gemäß Anspruch 3, wobei
die unterschiedlichen Antennenfelder des Endgerätes eine Übertragung eines einzelnen Codewortes, CW, entsprechend einem Übertragungsblock, TB, des PUSCH ausführen (801) und das einzelne CW zu einer Datenübertragungsschichtmenge zugeordnet ist.

5. Das Verfahren gemäß Anspruch 3, wobei
die unterschiedlichen Antennenfelder des Endgerätes eine Übertragung eines einzelnen CW des PUSCH unter Verwendung einer einzelnen Redundanzversion, RV, ausführen.

6. Das Verfahren gemäß Anspruch 3, wobei
jedes Antennenfeld eine Vorcodierungsmatrix annimmt, die dem Antennenfeld entspricht, um einen separaten Vorcodierungsprozess auszuführen, wobei die NC-JT des PUSCH ausgeführt wird.

7. Das Verfahren gemäß Anspruch 3, wobei eine Übertragung des PUSCH ausgeführt wird und eine Maximalanzahl an Datenübertragungsschichten, die von jedem der Antennenfelder des Endgerätes verwendet werden, wie folgt ist: min{N-p1, N-p2, ... N-px, ... N-pX};
wobei X eine Gesamtzahl der Antennenfelder des Endgerätes ist, N-px eine Maximalzahl von Datenübertragungsschichten ist, die von einem x-ten Antennenfeld unterstützt werden, und x eine positive Ganzzahl kleiner als oder gleich groß wie X ist.

8. Das Verfahren gemäß einem der Ansprüche 2-7, wobei
die unterschiedlichen TCIs derselben Demodulationsreferenzsignal-,DMRS,-Port-Menge zugeordnet sind, wobei jede DMRS-Port-Menge einen oder mehrere DRMS-Ports aufweist.

9. Das Verfahren gemäß einem der Ansprüche 1-7, wobei die unterschiedlichen TCIs unterschiedlichen Übertragungsempfangspunkt-, TRP,-Richtungen einer Basisstation entsprechen.

10. Das Verfahren gemäß Anspruch 9, wobei die unterschiedlichen TCIs dazu konfiguriert sind, unterschiedliche Quasi-Co-Location-,QCL,-Type-D-Quellreferenzsignale anzugeben, und die QCL-Type-D-Quellreferenzsignale dazu verwendet werden, die TRP-Richtungen zu bestimmen.

11. Das Verfahren gemäß einem der Ansprüche 1-7, wobei die TCI eine der folgenden aufweist:
eine vereinheitlichte TCI;
Raumbeziehungsinformationen, SRI; oder
einen Sondierungsreferenzsignalressourcenindikator, SRI;
wobei optional unterschiedliche vereinheitlichte TCIs durch unterschiedliche TCI-Indikationsfelder übermittelt werden; oder unterschiedliche vereinigte TCIs durch ein einzelnes TCI-Indikationsfeld übermittelt werden; und/oder
wobei optional die vereinheitlichte TCI eine der folgenden aufweist: eine gemeinsame TCI; oder eine separate TCI.

12. Das Verfahren gemäß einem der Ansprüche 1-7, wobei der PUSCH zumindest einen der folgenden aufweist:
einen PUSCH, der durch Downlink-Steuerinformationen, DCI, geplant wird;
einen planfreien Type-1-Configured-Grant-,CG,-PUSCH; oder
einen planfreien Type-2-CG-PUSCH.

13. Das Verfahren gemäß einem der Ansprüche 1-7, wobei die TCI in zumindest einem der folgenden übermittelt wird:
einer Funkressourcensteuerung-,RRC,-Signalisierung;
einer Medienzugriffssteuerung-Steuerelement-,MAC-CE,-Signalisierung; oder
einer DCI-Signalisierung.

14. Eine Kommunikationsvorrichtung (3000), die einen Prozessor (3020), einen Speicher (3004) und ein ausführbares Programm aufweist, das auf dem Speicher (3004) gespeichert ist und durch den Prozessor (3020) ausführbar ist, wobei dann, wenn das ausführbare Programm durch den Prozessor (3020) ausgeführt wird, die Schritte des Verfahrens zum Konfigurieren des PUSCH gemäß einem der Ansprüche 1-13 implementiert werden.

15. Ein Speichermedium, auf dem ein ausführbares Programm gespeichert ist, wobei dann, wenn das ausführbare Programm durch einen Prozessor ausgeführt wird, die Schritte des Verfahrens zum Konfigurieren des PUSCH gemäß einem der Ansprüche 1-13 implementiert werden.

## Revendications

1. Procédé de configuration d'un canal partagé de liaison montante physique, PUSCH, comprenant :
pour une transmission en réseau monofréquence, SFN, unique d'un PUSCH de liaison montante, la configuration (701) de différentes indications de configuration de transmission, TCI, pour différents panneaux d'antenne d'un terminal,
dans lequel chaque TCI est configuré pour indiquer des informations de faisceau d'un faisceau utilisé lorsque le panneau d'antenne correspondant effectue la transmission SFN du PUSCH, dans lequel les informations de faisceau sont au moins configurées pour indiquer une direction du faisceau,
dans lequel les différents TCI sont associés à la même ressource de transmission, la ressource de transmission comprend une ressource dans le domaine temporel et une ressource dans le domaine fréquentiel, et les différents panneaux d'antennes effectuent la transmission SFN du PUSCH en utilisant le multiplexage par répartition spatiale, SDM ;
dans lequel la transmission SFN comprend l'utilisation d'une pluralité de panneaux d'antennes du terminal pour transmettre le même contenu de données à une pluralité de points de réception de transmission, TRP, en utilisant la même ressource dans le domaine fréquentiel au même moment.

2. Procédé selon la revendication 1, dans lequel la transmission SFN du PUSCH comprend :
une transmission conjointe non cohérente, NC-JT, d'un SFN.

3. Procédé selon la revendication 2, dans lequel les différents TCI sont associés au même ensemble de couches de transmission de données, et un ensemble de couches de transmission de données comprend : une ou plusieurs couches de transmission de données.

4. Procédé selon la revendication 3, dans lequel :
les différents panneaux d'antenne du terminal effectuent (801) la transmission d'un mot de code unique, CW, correspondant à un bloc de transmission, TB, du PUSCH, et le CW unique est associé à un ensemble de couches de transmission de données.

5. Procédé selon la revendication 3, dans lequel :
les différents panneaux d'antenne du terminal effectuent la transmission d'un CW unique du PUSCH en utilisant une version redondante, RV, unique.

6. Procédé selon la revendication 3, dans lequel :
chaque panneau d'antenne adopte une matrice de précodage correspondant au panneau d'antenne pour effectuer un processus de précodage séparé, dans lequel le NC-JT du PUSCH est effectué.

7. Procédé selon la revendication 3, dans lequel une transmission du PUSCH est effectuée, et un nombre maximal de couches de transmission de données utilisées par chacun des panneaux d'antenne du terminal est : min{N-p1, N-p2, ... N-px, ... N-pX} ;
où X est un nombre total des panneaux d'antenne du terminal, N-px est un nombre maximal de couches de transmission de données prises en charge par un x^{ème} panneau d'antenne, et x est un nombre entier positif inférieur ou égal à X.

8. Procédé selon l'une quelconque des revendications 2 à 7, dans lequel
les différents TCI sont associés au même ensemble de ports de signal de référence de démodulation, DMRS, chaque ensemble de ports DMRS comprenant un ou plusieurs ports DMRS.

9. Procédé selon l'une quelconque des revendications 1 à 7, dans lequel les différents TCI correspondent à différentes directions de point de réception de transmission TRP d'une station de base.

10. Procédé selon la revendication 9, dans lequel les différents TCI sont configurés pour indiquer différents signaux de référence de source quasi-colocalisés, QCL, de Type-D, et les signaux de référence de source QCL de Type-D sont utilisés pour déterminer les directions TRP.

11. Procédé selon l'une quelconque des revendications 1 à 7, dans lequel le TCI comprend l'un des suivants :
un TCI unifié ;
des informations sur les relations spatiales de signal de référence sonore, SRI ; ou
un indicateur de ressource de signal de référence sonore, SRI ;
facultativement, dans lequel différents TCI unifiés sont transportés par différents champs d'indication TCI ; ou différents TCI unifiés sont transportés par un seul champ d'indication TCI ; et/ou
facultativement, dans lequel le TCI unifié comprend l'un des suivants : un TCI commun ; ou un TCI séparé.

12. Procédé selon l'une quelconque des revendications 1 à 7, dans lequel le PUSCH comprend au moins l'un des suivants :
un PUSCH programmé par les informations de commande de liaison descendante, DCI ;
une subvention configurée, CG, sans programme PUSCH de Type-1 ; ou
une CG PUSCH de Type-2 sans programme.

13. Procédé selon l'une quelconque des revendications 1 à 7, dans lequel le TCI est transporté dans au moins l'un des suivants :
une signalisation de commande de ressource radio, RRC ;
un élément de signalisation de contrôle d'accès au média, MAC-CE ; ou
une signalisation interconnexion de centres de données, DCI.

14. Dispositif de communication (3000) comprenant un processeur (3020), une mémoire (3004) et un programme exécutable stocké dans la mémoire (3004) et exécutable par le processeur (3020), dans lequel, lorsque le programme exécutable est exécuté par le processeur (3020), les étapes du procédé de configuration du PUSCH selon l'une quelconque des revendications 1 à 13 sont mises en œuvre.

15. Support de stockage sur lequel est enregistré un programme exécutable, dans lequel, lorsque le programme exécutable est exécuté par un processeur, les étapes du procédé de configuration du PUSCH selon l'une quelconque des revendications 1 à 13 sont mises en œuvre.
